# EUROPEAN PATENT SPECIFICATION

(11) **EP 2 981 856 B1**
(45) Date of publication and mention of the grant of the patent: **12.02.2020**
(21) Application number: 14779873.0
(22) Date of filing: 04.04.2014
(51) Int. Cl.: G01C 21/34, G01W 1/14, G01C 21/36, G01W 1/10

(54) **METHOD AND SYSTEM FOR DISPLAYING WEATHER INFORMATION ON A TIMELINE**
VERFAHREN UND SYSTEM ZUR ANZEIGE VON WETTERINFORMATIONEN AUF EINER ZEITLINIE
PROCÉDÉ ET SYSTÈME PERMETTANT D'AFFICHER DES INFORMATIONS MÉTÉOROLOGIQUES SUR UN SCHÉMA CHRONOLOGIQUE

(30) Priority: 04.04.2013 US 201313856923; 16.06.2013 US 201361835626 P; 19.06.2013 US 201361836713 P; 20.06.2013 US 201313922800; 26.06.2013 US 201361839675 P; 22.07.2013 US 201313947331
(43) Date of publication of application: 10.02.2016
(73) Proprietor: Sky Motion Research, ULC, Montreal, Québec H3A 1P8 (CA)
(72) Inventor: LeBlanc, Andre, Mont-Royal, Québec H3R 1Z6 (CA)
(74) Representative: Schulte, Drew Joseph
(86) International application number: PCT/CA2014/000317
(87) International publication number: WO 2014/161079

(56) References cited:
- WO-A1-02/23462
- US-B1- 7 421 344
- US-B2- 6 590 529
- US-B2- 6 985 837
- Abdulrahman Qhtani: "WeatherSpark : Beautiful weather graphs and maps", YouTube, 25 February 2012 (2012-02-25), pages 1-1, XP054976623, Retrieved from the Internet: URL:https://www.youtube.com/watch?v=6LZjaw eaXyc [retrieved on 2016-06-22]
- QHTANI , ABDULRAHMAN: 'WeatherSpark', [Online] 25 February 2012, XP054976623 Retrieved from the Internet: <URL:HTTPS://WWW.YOUTUBE.COM/WATCH?V=6LZJAW EAXYC> [retrieved on 2014-05-26]
- 'New AccuWeather App for Windows 8 Takes Users on a Journey' PRESS RELEASE 26 October 2012, XP055293627 Retrieved from the Internet: <URL:http://www.accuweather.com/en/press/69 9373> [retrieved on 2014-05-26]

## Description

### BACKGROUND

The subject matter disclosed generally relates to methods for producing weather forecasts. More specifically, the subject matter relates to software applications for producing weather forecasts.

### (b) Related Prior Art

Conventional weather forecasting systems provide weather predictions twelve hours to a few days from the present time. If one needs a short-term forecast or a forecast with a fine time scale, the best information available is usually an hourly forecast for the day.

Conventional weather forecasts are average forecasts for the area for which they are generated. Thus, a forecast may be inaccurate for a precise location within this area, and even the present weather displayed for an area may differ from the actual weather for a precise location within this area.

Moreover, conventional weather forecasts are displayed on a time scale that is too coarse to allows a user to know when a weather event takes place in a precise location and time. Even for hourly conventional weather forecasts, it is impossible for the user to know if the forecasted weather event lasts one hour or one minute and, for the latter, at what time it takes place exactly within the hour.

Furthermore, weather forecasts may be inaccurate and there is no way to know it since there is no interaction with the users. Collaboration with the users is thus needed.

Therefore, there is a need in the market for the generation of short-term weather forecasts, and a convenient and collaborative way to display these weather forecasts is also needed.

### SUMMARY

Provided herein are computer-implemented methods that may comprise the following: identifying first weather information associated with a first time, and a first location, and a first weather event; identifying second weather information associated with a second time;identifying third weather information associated with a third time and the first weather event; identifying observation data received from a user and related to the first weather information; and generating, for display on a display device, a first timeline based on the observation data, the first weather information, the second weather information, and the third weather information.

In some embodiments, the first, second and third times may be different times. The first time may be a past time, the second time may be a current time, and the third time may be a future time.

In some embodiments, at least one of the first, second and third weather information may comprise a forecasted weather value indicative of a probability of having a first type of precipitation in the first location with a first intensity.

In some embodiments, the first, second and third weather information may be related to the first location. Further background information can be found in the following documents:
"WeatherSpark: Beautiful weather graphs and maps", YouTube, 25 February 2012, XP054976623. US7421344, which discloses a system and method for generating weather reports and the like which are precisely computed automatically for a particular individual user's geographic location, e.g., home or work, and which are provided to the individual user in both graphical and textual format in a user interactive manner.

In some embodiments, the second weather information may be related to the first weather event.

In some embodiments, the first, second and third weather information may be related to the user.

In some embodiments, the observation data may be at least one of a picture, a video, and a comment input by a user related to the first, weather information.

In some embodiments, the method may further comprise generating a second timeline, for display on the display device with the first timeline, the second timeline comprising information indicative of weather information associated with a fourth time and a fifth time.

In some examples the first timeline may be associated with the first location and the second timeline is associated with a second location different from the first location.

In some embodiments, the first timeline may be associated with a first weather event and the second timeline may be associated with a second weather event different from the first weather event.

In some embodiments, the first timeline may be associated with a first user and the second timeline may be associated with a second user different from the first user, and at least a portion of the observation data is received from the first and second users.

In some embodiments, the first weather event to a weather event comprising at least one of a tornado, a hurricane, a hail cloud, a heavy rain, a heavy snow, a derecho, and a downburst.

Further, there may be a computer implemented method not forming part of the invention, for displaying weather information to a user at a given time, the weather information relating to a given period and to a given territory, and including a succession of weather forecasts, past weather observations, present weather observations or a user input. The method may comprise: receiving the past weather observations or the present weather observations; using the past weather observations or the present weather observations for preparing forecasted weather values; using the forecasted weather values for generating the succession of weather forecasts starting after the given time and for subsequent times separated by a time increment; building a timeline displaying the weather information, the timeline covering the given period, the given period both preceding and succeeding to the given time; and receiving the user input that is added to the timeline.

In some examples, the step of receiving the user input may comprise receiving a picture, a video, a comment or a weather value.

In some examples the step of receiving the user input may comprise receiving a picture, a video, a comment or a weather value relating to a weather event, the weather event comprising at least one of a tornado, a hurricane, a hail cloud, a heavy rain cloud, a derecho, and a downburst.

In some embodiments, there may be a device comprising one or more processors, a memory storing computer instructions that can be executed by the one or more processors such that the device is caused to perform any one or more of the methods described above, when the instructions are executed. Further, there may be a non-transitory computer-readable medium storing such instructions.

Further, there may be a device that comprises one or more processors, a memory storing instructions for the one or more processors, a communication module to connect to a remote server over a communication network, and a display. When the instructions are executed, the device may be caused to: receive, from the remote server, a time line comprising a plurality of weather forecasts and observation data associated with at least one of the plurality of weather forecasts, and cause, on the display, a display of at least a part of the time line received from the remote server. The device may be a mobile device such as, non-exclusively, a handheld device, a cellphone, a vehicle, etc.

### BRIEF DESCRIPTION OF THE DRAWINGS

Further features and advantages of the present disclosure will become apparent from the following detailed description, taken in combination with the appended drawings, in which:
Figure 1 is a block diagram illustrating an example of a method and system for displaying weather information on a timeline;
Figure 2A is a block diagram showing an example of a suitable nowcaster for implementing the embodiments;
Figure 2B is a more detailed block diagram showing an example of a suitable nowcaster for implementing the embodiments;
Figure 2C is a more detailed block diagram showing another example of a suitable nowcaster for implementing the embodiments;
Figure 3A is a screenshot illustrating an example of a user interface on which weather information is displayed on various timelines, according to an embodiment;
Figure 3B is a screenshot illustrating an example of a user interface on which weather information is displayed on various timelines with which the user may interact independently, according to an embodiment;
Figure 4 is an example of a network environment in which the embodiments may be practiced;
Figure 5 is an exemplary diagram illustrating a suitable computing operating environment in which embodiments of the claimed subject matter may be practiced;
Figure 6 is a block diagram illustrating an example of a timeline displaying examples of weather information in one location, according to an embodiment; and
Figure 7 is a block diagram illustrating an example of a timeline displaying examples of weather information relating to a weather event, according to an embodiment.

It will be noted that throughout the appended drawings, like features are identified by like reference numerals.

### DETAILED DESCRIPTION

The embodiments will now be described more fully hereinafter with reference to the accompanying drawings, which form a part hereof, and which show, by way of illustration, specific embodiments by which the embodiments may be practiced. The embodiments are also described so that the disclosure conveys the scope of the claimed subject matter to those skilled in the art. The embodiments may, however, be embodied in many different forms and should not be construed as limited to the embodiments set forth herein.

Among other things, the present embodiments may be embodied as methods or devices. Accordingly, the embodiments may take the form of an entirely hardware embodiment, or an entirely software mbodiment. Furthermore, although the embodiments are described with reference to a portable or handheld device, they may also be implemented on desktops, laptops, tablet devices, or any computing device having sufficient computing resources to implement the embodiments.

### Definitions

In the present specification, the following terms are meant to be defined as indicated below:

Nowcasting is a contraction of "now" and "forecasting"; it refers to the sets of techniques devised to make short-term forecasts, typically in the 0 to 12 hour range.

A nowcaster is a weather forecasting device which prepares very short-term (e.g., one minute, five minutes., 15 minutes, 30 minutes, etc.) forecasts for a given territory, which is a very small region on Earth (5 meters, 10 meters, 50 meters, 100 meters, 500 meters, 1,000 meters, etc.).

A weather value is a weather related quantity or attribute of any sort, such as temperature, pressure, visibility, precipitation type and intensity, accumulation, cloud cover, wind, etc.

A forecasted weather value is a weather value that is predicted by the nowcaster.

A weather-related event is, for example, at least one event of hail, a wind gust, lightning, a temperature change, etc.

Precipitation type (PType) indicates the type of precipitation. Examples of precipitation types include, but are not limited to, rain, snow, hail, freezing rain, ice pellets, ice crystals, etc..

Precipitation rate (PRate) indicates the precipitation intensity. Examples of precipitation rate values include, but are not limited to, no (i.e., none), light, moderate, heavy, extreme. In an embodiment, the precipitation rate can also be expressed as a range of values such as: none to light, light to moderate, moderate to heavy, or any combination of the above.

Precipitation probability indicates the probability that precipitation might occur. Examples of precipitation probability values include, but are not limited to, no, unlikely, slight chance of, chance of, likely, very likely, and certain, etc.

In an embodiment, the precipitation probability can also be expressed as a range of values such as: none to light, light to moderate, moderate to heavy. Precipitation probability may also be expressed in terms of percentages; e.g., 0%, 25%, 50%, 75%, 100%, etc.; or ranges of percentages; e.g., 0% to 25%, 25% to 50%, 50% to 75%, 75% to 100%, etc. In an embodiment, the precipitation probability may be taken from a probability distribution.

Precipitation type and precipitation rate categories (PTypeRate): a PTypeRate category is combination of precipitation type and precipitation rate to which may be associated a probability of occurrence for a given period to indicate the possibility of receiving a certain type of precipitation at a certain rate.

A weather forecast is a set of one or more forecasted weather values that are displayable to users.

A user is a person to whom or a machine to which a weather forecast is forwarded.

A weather event is any measured or forecasted weather value, weather forecast or weather source.

Briefly stated, the present embodiments describe a computer-implemented method and system for displaying weather information on a timeline. The weather forecast is generated by a short-term weather forecaster known as system for generating nowcasts or nowcaster.

### Displaying Weather Information on a Timeline

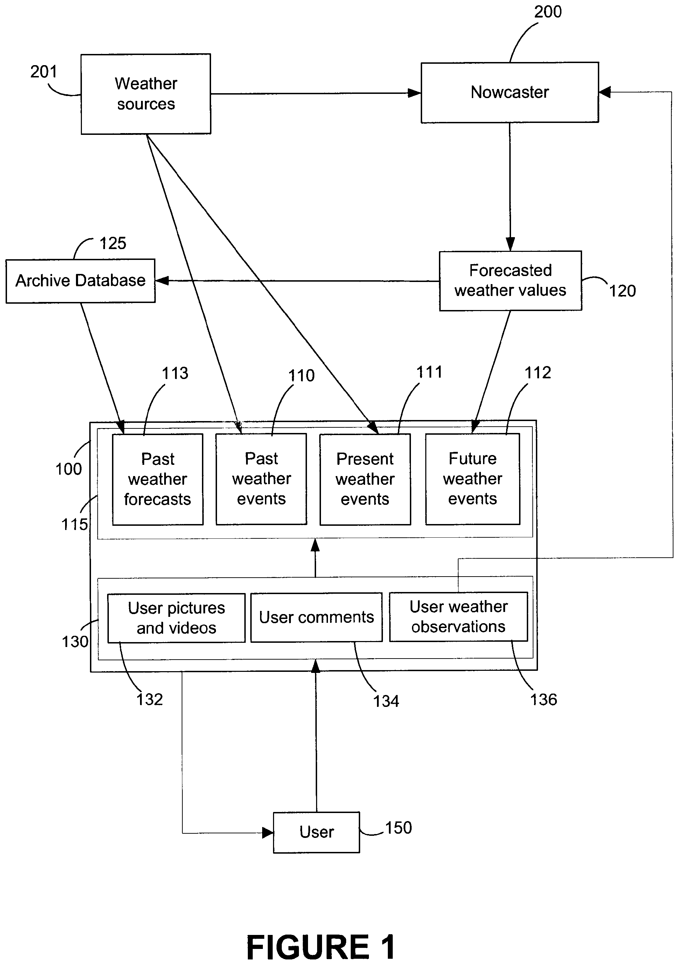

Figure 1 illustrates a method and system for displaying weather information using a timeline generator **100.**

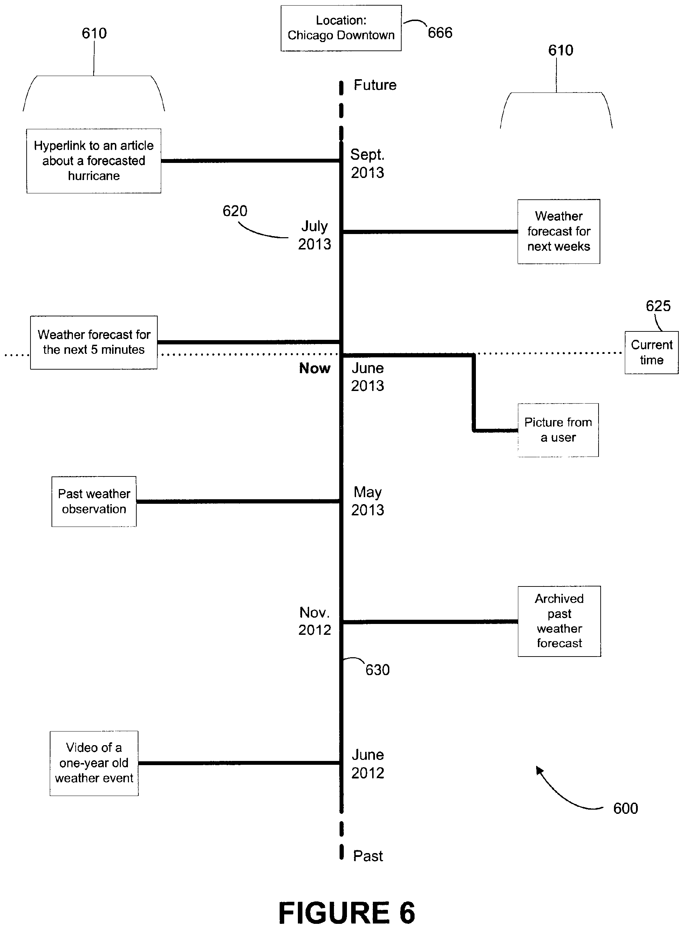

According to an embodiment, the nowcaster **200** may be used to prepare nowcasts that may be displayed on the timeline **600** illustrated in Figure 6 using the timeline generator **100.** More precisely, the nowcaster **200** uses weather sources **201** to prepare forecasted weather values **120.** The weather sources **201** may be categorized as past weather observations and present weather observations. The past weather observations may include archived weather observations.

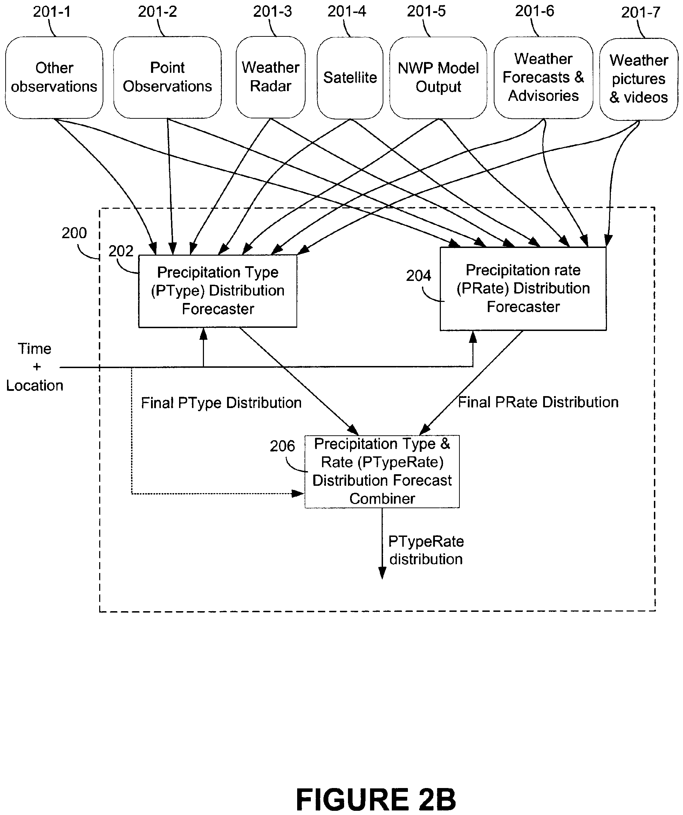

The timeline generator **100** uses weather events **115,** which comprise at least one of the following: past weather events **110,** present weather events **111,** and future weather events **112.** For past weather events **110** and present weather events **111,** the weather sources **201** may be used directly. Since weather sources **201** may comprise elements like measured weather values (such as temperature, precipitation type and rate, pressure, weather radars and satellite observations, weather pictures and videos, and other weather sources as detailed in Figure 2B, it is possible to display such elements to represent past weather events **110** and present weather events **111** on the timeline **600** using the timeline generator **100.**

Future weather events **112** may be taken into account by the timeline generator **100** by using the forecasted weather values **120.** According to an embodiment, the forecast of weather events or weather values may be depicted by predefined pictures or videos.

According to an embodiment, the forecasted weather values **120** may be stored in an archive database **125.** This archive database **125** may serve as a basis for including past weather forecasts **113** among the weather events **115** in the timeline generator **100.**

Once the timeline generator **100** has everything it needs to operate, it sends the timeline **600** to the user **150.** According to an embodiment, this sending occurs through a communication network **254.**

According to the invention, there is collaboration from the users **150** to improve the timeline **600** by sending information to the timeline generator **100.** The timeline generator **100** comprises incorporating the user input **130** to the timeline **600.** For example, the user input **130** may comprise user picture or video **132,** a user comment **134,** or a user weather observation **136.** A user weather observation **136** may be a fact about the weather that helps to confirm or correct the weather events **115** displayed in the timeline **600,** such as a light rain at a specific location. In that case, the user weather observations **136** may be sent to the nowcaster **200** as additional input information for nowcasting. A user weather observation **136** may also be an interesting fact such as the presence of a tornado or a lightning, which could be incorporated directly in the present weather events **111** or the future weather events **112** as weather emergencies that can be tracked. If dangerous or interesting weather events are tracked, an alert could be sent to the user **150** via the timeline generator **100.**

As the collaboration is used in the method, the additions made by the user **150** to the timeline generator **100** are incorporated into the timeline **600** that is displayed to the other users, so it is possible for one user **150** to see the pictures, comments, or other user input **130** of other users. Optionally, the user **150** could choose to have a timeline generator **100** that works specifically for a given city or region, or for the current location, or over an area around this location with a given radius and to follow a given weather event, as described hereinbelow.

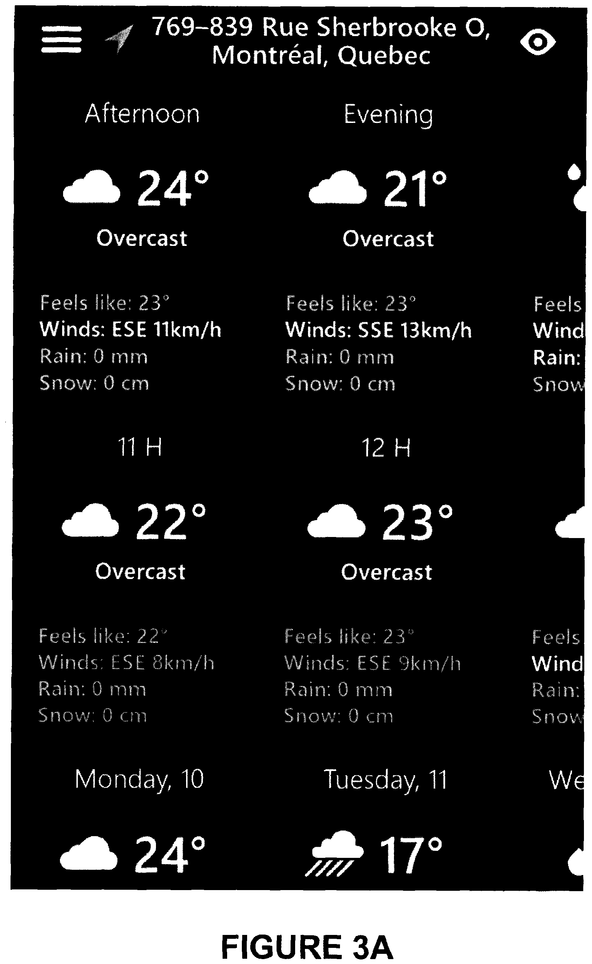

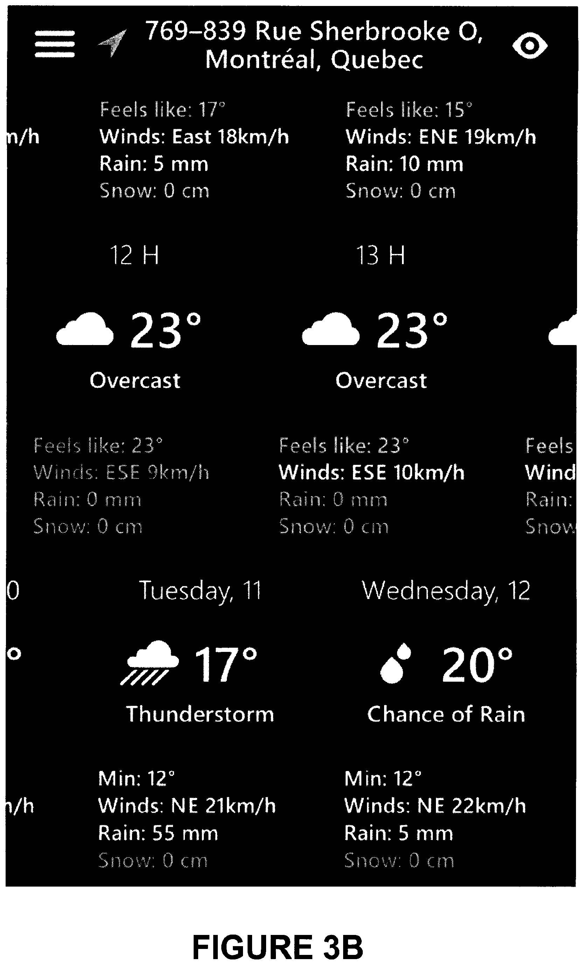

Figures 3A and 3B illustrate embodiments of the user interface comprising the display of the timeline **600.** As seen on Figure 3A, there may be a plurality of timelines, each one with its own first time and its own time increment. Figure 3B shows that a user **150** may interact with these timelines independently, going forward or backward on a timeline, one timeline at a time.

Figure 6 is a block diagram illustrating another embodiment of the display of the timeline **600,** including the display of various examples of weather information **610** for the location **666.** The weather information **610** may comprise a succession of weather forecasts prepared by the nowcaster **200** which form the basis of the future weather events **112** or of the past weather forecasts **113,** user input **130** as described hereinabove, or weather sources **201** categorized in either present weather observations or past weather observations.

According to the embodiment presented in Figure 6, the timeline may include weather information **610** relating to the times before, after or at a given time **625** at which the user **150** views the timeline **600.** The given time **625** may be a current time. The user **150** may also scroll down on the timeline to view older weather information until the oldest weather information is reached, and scroll up to view future weather events **112** until there is no further future weather event.

The weather information **610** that is displayed may be pinned on the time axis **630.** The pinned weather information **610** may appear with a corresponding display time **620.**

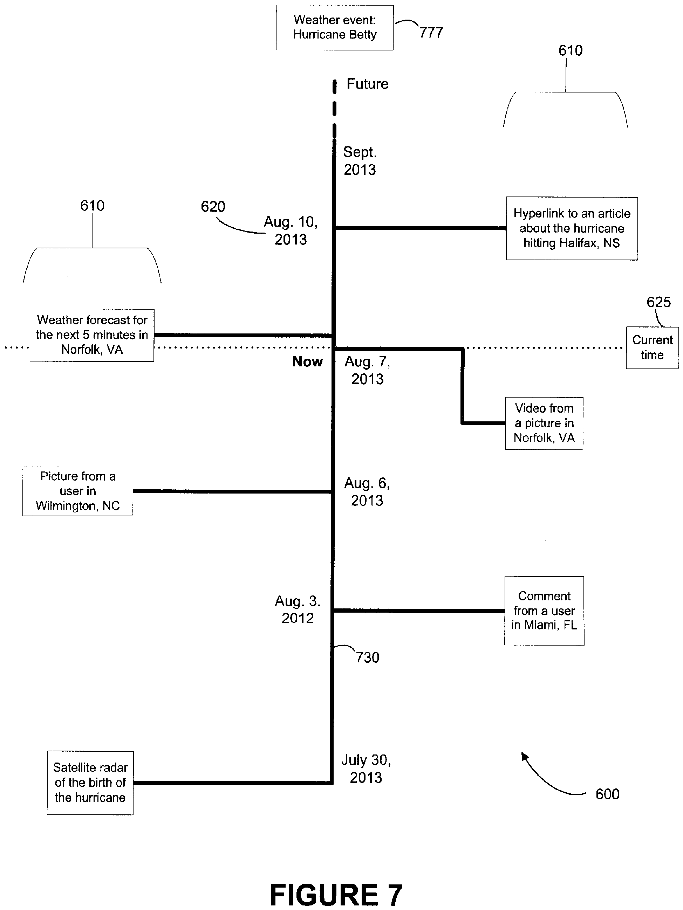

Figure 7 is a block diagram illustrating another embodiment of the display of the timeline **600,** including the display of various examples of weather information **610** for the weather event **777.** Since the timeline **600** displays weather information **610** about a weather event **777,** the timeline **600** may relate to more than one location. The followed weather event **777** may be any event related to precipitation, temperature or wind, such as a tornado, a hurricane, a hail or a wind storm, a derecho storm, a downburst, etc. The weather information **610** may comprise a succession of weather forecasts prepared by the nowcaster **200** and which form the basis of the future weather events **112** or of the past weather forecasts **113,** user input **130** as described hereinabove, or weather sources **201** categorized in either present weather observations or past weather observations.

According to the embodiment presented in Figure 7, the timeline may include weather information relating to the times before, after or at a given time **625** at which the user **150** views the timeline **600.** The given time **625** may be a current time. The user **150** may also scroll down on the timeline to view older weather information until the oldest weather information is reached, which corresponds to the birth of the weather event, and scroll up to view future weather events **112** until there is no further future weather event.

The weather information **610** that is displayed may be pinned on the time axis **630.** The pinned weather information **610** may appear with a corresponding display time **620.**

### Nowcaster

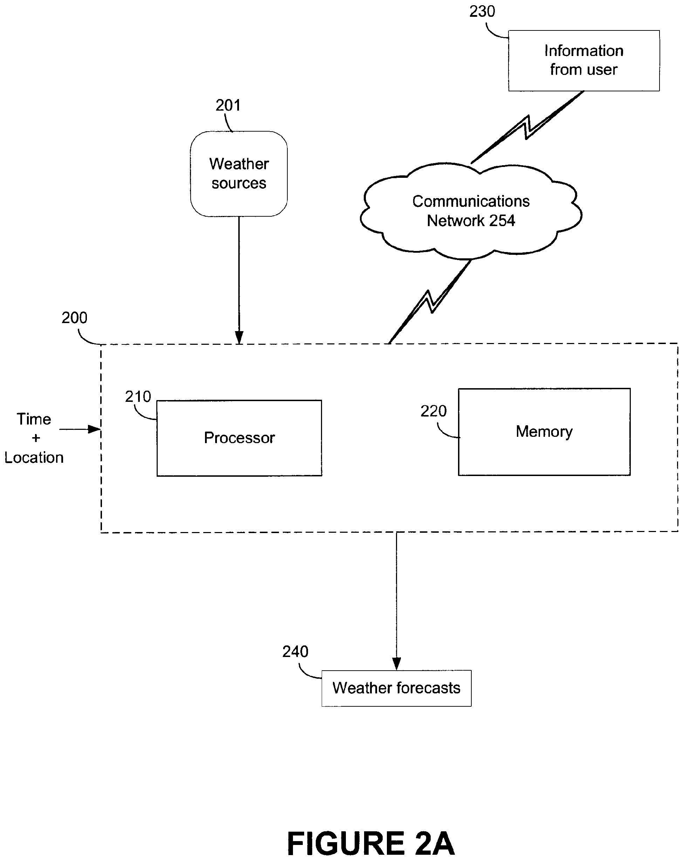

Figures 2A-2C are block diagrams of a nowcaster according to one or more embodiments of the subject matter described in the specification.

As shown in Figures 2A-2C, the nowcaster **200** receives weather observations from different sources **201,** such as weather observation sources, including but not limited to, point observations **201-2** (e.g., feedback provided by users and automated stations), weather radars **201-3,** satellites **201-4** and other types of weather observations **201-1,** and weather forecast sources such as numerical weather prediction (NWP) model output **201-5** and weather forecasts and advisories **201-6.**

The nowcaster **200** comprises a memory **220** and a processor **210.** The memory **220** comprises the instructions for the method and also stores data from the weather sources **201,** intermediate results and weather forecasts. The processor **210** allows the nowcaster **200** to perform calculations.

The nowcaster **200** can receive information **230** from a user **150** through a communication network **254.**

The nowcaster **200** outputs a weather forecast or a succession of weather forecasts.

Figure 2B is one embodiment of the nowcaster **200.** In this embodiment, the nowcaster **200** comprises a PType distribution forecaster **202** and a PRate distribution forecaster **204.** The PType distribution forecaster **202** receives the weather observations from the different weather sources **201** and outputs a probability distribution of precipitation type over an interval of time, for a given latitude and longitude (and/or location). For example:
a. Snow: 10%
b. Rain: 30%
c. Freezing Rain: 60%
d. Hail: 0%
e. Ice Pellets: 0%

Similarly, the PRate forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip.: 30%
g. Light: 40%
h. Moderate: 20%
i. Heavy: 10%

The PRate and PType values output by the PRate forecaster **204** and the PType forecaster **202** are sent to a forecast combiner **206** to combine these values into a single value PTypeRate which represents the precipitation outcomes. For example, if the value of PType is "Snow", and the value of "PRate" is heavy, the combined value of PTypeRate may be "heavy snow".

For a given latitude and longitude, the system outputs forecasted PTypeRate Distributions for predefined time intervals, either fixed (ex: 1 minute) or variable (e.g., one minute, five minutes, then 10 minutes, etc.). The system can either pre-calculate and store forecasted PTypeRate Distributions in a sequence of time intervals, or calculate then on the fly. A PTypeRate Distribution represents, for each time interval, the certainty or uncertainty that a PTypeRate will occur.

With reference to Figure 2B, the forecast combiner **206** receives the final PRate distribution from the PType forecaster **202** and the final PRate distribution from the PRate forecaster **204** to combine them into a group of PTypeRate distribution values each representing the probability of receiving a certain type of precipitation at a certain rate. An example is provided below.

Assuming that the PType distribution is as follows: Snow: 50%, Rain 0%, Freezing rain: 30%, Hail: 0%, Ice pellets: 20%, and the PRate distribution is as follows: None: 0%, Light: 10%, Moderate: 20%, Heavy: 30%, Very heavy: 40%, the PTypeRate distributions may be as follows:

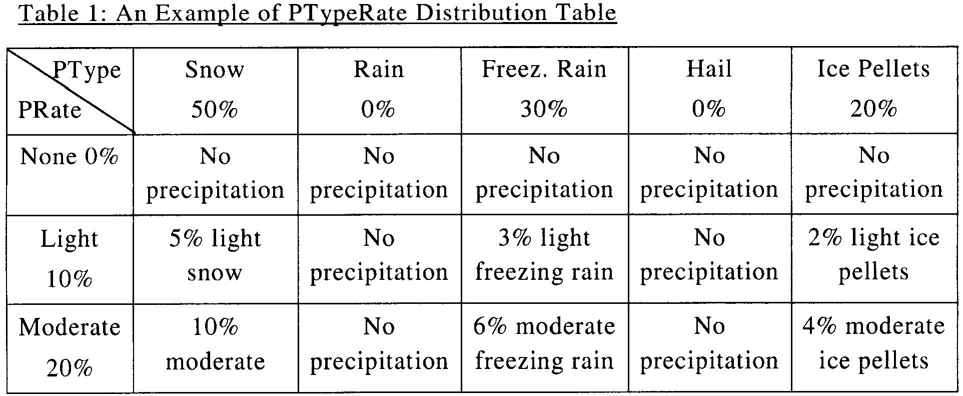

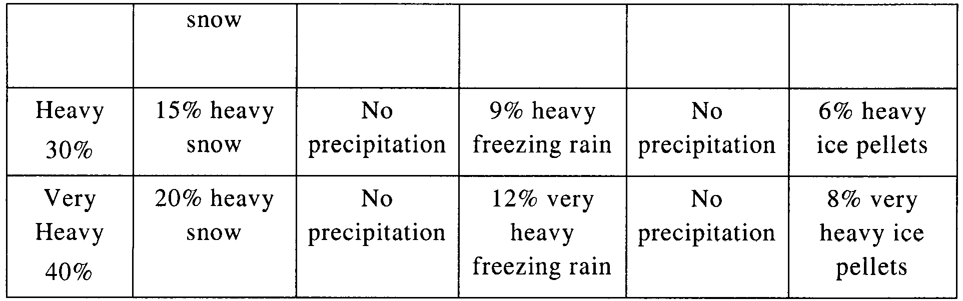

Accordingly, the forecast combiner **206** multiplies the probability of each type of precipitation by the probability of each rate of precipitation to obtain a probability of receiving a certain type of precipitation at a certain rate, for example, 20% chance of heavy snow, or 12% chance of very heavy freezing rain. In an embodiment, it is possible to associate probability ranges with textual information for displaying the textual information to a user instead of the probabilities in numbers. For example, probabilities that are between 5% and 15% may be associated with the text: "low chance," while probabilities that are between 40% and 70% may be associated with the text "high chance," or "very likely," etc. whereby, instead of displaying: "60% chance of heavy snow," it is possible to display: "high chance of heavy snow".

In another embodiment, it is possible to combine two or more different PTypeRates along one or more dimensions (the dimensions including: the rate, type, or probability). For example, results of such combination may include: Likely light to moderate rain; Likely light to moderate rain or heavy snow; Likely moderate rain or snow; Likely rain or snow; Chance of light to moderate rain or heavy snow or light hail; Chance of moderate rain, snow or hail; Chance of rain, snow or hail, etc.

Accordingly, the nowcaster **200** receives the location for which the nowcasts are needed and the time and/or time interval for which the nowcasts are needed and outputs the PTypeRate distribution for the given location and for the specific time.

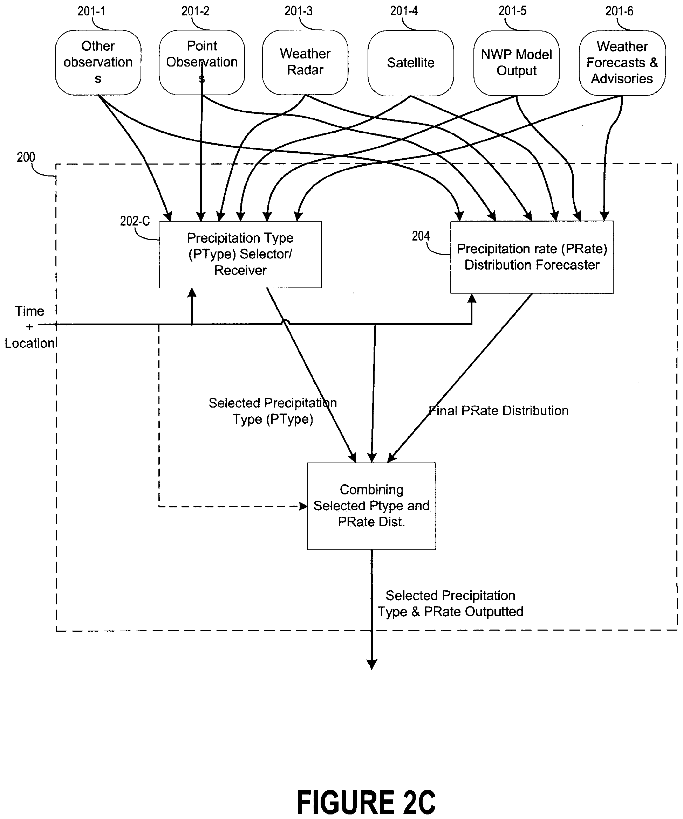

Figure 2C illustrates another embodiment of the nowcaster **200.** In this embodiment, the nowcaster **200** comprises a PType selector/receiver **202-C** and a PRate distribution forecaster **204.**

Similar to the embodiment shown in Figure 2B, the PRate distribution forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip.: 30%
g. Light: 40%
h. Moderate: 20%
i. Heavy: 10%

However, the PType selector/receiver **202-C** does not output a probability distribution associated with different types of precipitation. Instead, the PType selector/receiver **202-C** receives weather observations for a given latitude and longitude from the different sources **201** to select one precipitation type from a list of different precipitation types. For example, based on the inputs received from the sources **201,** the PType selector/receiver **202-C** selects a single precipitation type that is most likely to occur in the given latitude and the longitude (and/or location) from the following list of precipitation types:
a. Snow
b. Rain
c. Freezing Rain
d. Hail
e. Ice Pellets
f. Mix (e.g., a+c, a+d, b+c, a+e, c+e, d+e, etc.)

From the list of precipitation types, such as the one above, only one precipitation type is selected for a given location. For example, a mix of snow and freezing rain can be selected as the most likely precipitation type for a given location at a given time. The precipitation type is not associated with a probability value. In fact, since only one precipitation type is selected for any given location and time corresponding to the location, the selected precipitation type will have the effective probability value of 100%.

The list of precipitation types that are available for selection of one type may include a mix type that represent a mix of two different precipitation types (e.g., snow and freezing rain, hail and ice pellets, etc). A mix type is considered as a distinct precipitation type available for selection, and as shown above in type (f) of the list in paragraph [0070], there can be many different mix types representing the mix of different pairs of various precipitation types.

In another embodiment, the precipitation type is not selected by the PType selector/receiver **202-C** but instead is received from a source outside the nowcaster **200.** In other words, the nowcaster **200** may send a request to a remote source (e.g., a third-party weather service) for identification of the precipitation type that is most likely to occur at a given location at a given time and receive a response from the source identifying the most likely precipitation type. In this case, selection of the precipitation type is not performed by the nowcaster **200.** The already-selected precipitation type is merely inputted to the nowcaster **200,** and consequently it may save computational power of the nowcaster **200** that would otherwise have been needed to perform the selection.

The selected precipitation type and the PRate values respectively output by the PType selector/receiver **202-C** and the PRate distribution forecaster **204** are combined. For example, if the selected precipitation type is snow, and the PRate values are as described above, the combined information would indicate:
a. No Snow: 30%
b. Light Snow: 40%
c. Moderate Snow: 20%
d. Heavy Snow: 10%.

As only one precipitation type is concerned, only minimal amount of computational power is needed to perform the combining to output the final weather forecast data. Since the PType selector/receiver **202-C** will output one precipitation type for a given location and time, if the PRate distribution forecaster **204** outputs a number m of probability distribution, the final weather forecast data will comprise only a number m (m*1) of weather forecast distribution.

In outputting the final weather forecast data, it is possible to associate probability ranges with textual information for displaying the textual information to the user instead of the probabilities in numbers, similar to the embodiment shown in Figure 2B. For example, probabilities that are between 5% and 15% may be associated with the text: "low chance," while probabilities that are between 40% and 70% may be associated with the text "high chance," or "very likely," etc. whereby, instead of displaying: "60% chance of heavy snow," it is possible to display: "high chance of heavy snow".

Accordingly, the nowcaster **200** receives the location for which the nowcasts are needed and the time and/or time interval for which the nowcasts are needed and outputs the selected PType and PRate distribution for the given location and for the specific time.

The nowcaster **200** according to the embodiment shown in Figure 2C may be advantageous over the embodiment shown in Figure 2B in certain circumstances in which efficiency is desired. The embodiment of Figure 2C can be implemented using much less processing power than the embodiment of Figure 2B. However, the embodiment of Figure 2B may be more suitable than the embodiment of Figure 2C in providing more detailed and accurate snapshots of weather forecast data for any given location and time.

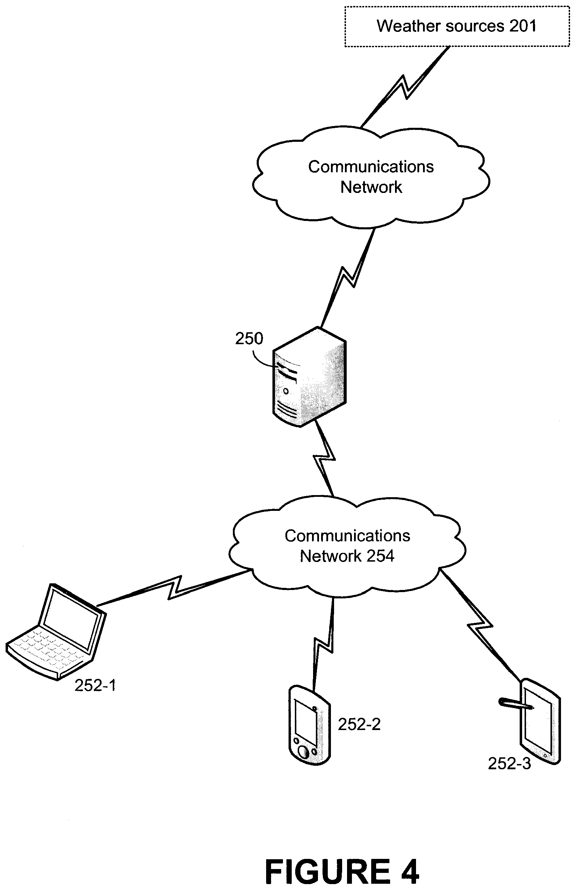

Figure 4 is an example of a network environment in which the embodiments may be practiced. The nowcaster **200** may be implemented on a server **250** which is accessible by a plurality of client computers **252** over a communication network **254.** The client computers **252** may include, but are not limited to, laptops, desktops, portable computing devices, tablets and the like. Using a client computer **252,** each user **150** may view the displayed forecasted weather values. The server accesses weather sources **201** over a communication network **254** as discussed in connection with Figures 2B and 2C. The server **250** may have map data stored thereon.

### Hardware and Operating Environment

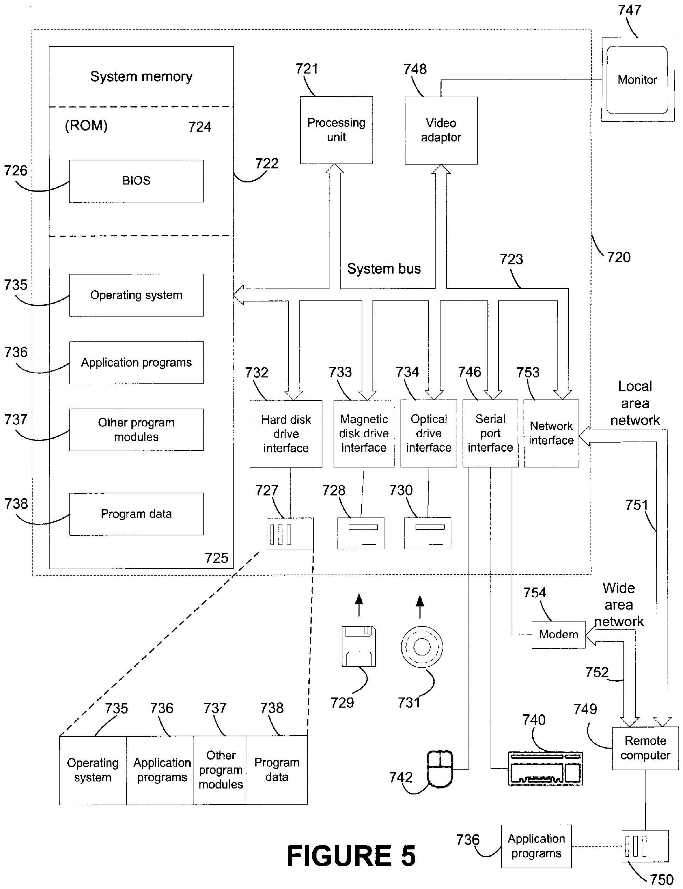

Figure 5 illustrates an exemplary diagram of a suitable computing operating environment in which embodiments of the claimed subject matter may be practiced. The following description is associated with Figure 5 and is intended to provide a brief, general description of suitable computer hardware and a suitable computing environment in conjunction with which the embodiments may be implemented.

Although not required, the embodiments are described in the general context of computer-executable instructions, such as program modules, being executed by a computer, such as a personal computer, a hand-held or palm-size computer, smartphone, or an embedded system such as a computer in a consumer device or specialized industrial controller. Generally, program modules include routines, programs, objects, components, data structures, etc., that perform particular tasks or implement particular abstract data types.

Moreover, those skilled in the art will appreciate that the embodiments may be practiced with other computer system configurations, including hand-held devices, multiprocessor systems, microprocessor-based or programmable consumer electronics, network PCS, minicomputers, mainframe computers, cellular telephones, smartphones, display pagers, radio frequency (RF) devices, infrared (IR) devices, Personal Digital Assistants (PDAs), laptop computers, wearable computers, tablet computers, a device of the iPod or iPad family of devices, integrated devices combining one or more of the preceding devices, or any other computing device capable of performing the methods and systems described herein. The embodiments may also be practiced in distributed computing environments wherein tasks are performed by remote processing devices that are linked through a communications network. In a distributed computing environment, program modules may be located in both local and remote memory storage devices.

The exemplary hardware and operating environment of Figure 5 includes a general purpose computing device in the form of a computer **720,** including a processing unit **721,** a system memory **722,** and a system bus **723** that operatively couples various system components including the system memory to the processing unit **721.** There may be only one or there may be more than one processing unit **721,** such that the processor of computer **720** comprises a single central-processing unit (CPU), or a plurality of processing units, commonly referred to as a parallel processing environment. The computer **720** may be a conventional computer, a distributed computer, or any other type of computer; the embodiments are not so limited.

The system bus **723** may be any of several types of bus structures including a memory bus or memory controller, a peripheral bus, and a local bus using any of a variety of bus architectures. The system memory may also be referred to as simply the memory, and includes read only memory (ROM) **724** and random access memory (RAM) **725.** A basic input/output system (BIOS) 726, containing the basic routines that help to transfer information between elements within the computer **720,** such as during start-up, is stored in ROM **724.** In one embodiment of the claimed subject matter, the computer **720** further includes a hard disk drive **727** for reading from and writing to a hard disk, not shown, a magnetic disk drive **728** for reading from or writing to a removable magnetic disk **729,** and an optical disk drive **730** for reading from or writing to a removable optical disk **731** such as a CD ROM or other optical media. In alternative embodiments of the claimed subject matter, the functionality provided by the hard disk drive **727,** magnetic disk **729** and optical disk drive **730** is emulated using volatile or non-volatile RAM in order to conserve power and reduce the size of the system. In these alternative embodiments, the RAM may be fixed in the computer system, or it may be a removable RAM device, such as a Compact Flash memory card.

In an embodiment of the claimed subject matter, the hard disk drive **727,** magnetic disk drive **728,** and optical disk drive **730** are connected to the system bus **723** by a hard disk drive interface **732,** a magnetic disk drive interface **733,** and an optical disk drive interface **734,** respectively. The drives and their associated computer-readable media provide nonvolatile storage of computer-readable instructions, data structures, program modules and other data for the computer **720.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk, magnetic disk **729,** optical disk **731,** ROM **724,** or RAM **725,** including an operating system **735,** one or more application programs **736,** other program modules **737,** and program data **738.** A user may enter commands and information into the personal computer **720** through input devices such as a keyboard **740** and pointing device **742.** Other input devices (not shown) may include a microphone, joystick, game pad, satellite dish, scanner, touch sensitive pad, or the like. These and other input devices are often connected to the processing unit **721** through a serial port interface **746** that is coupled to the system bus, but may be connected by other interfaces, such as a parallel port, game port, or a universal serial bus (USB). In addition, input to the system may be provided by a microphone to receive audio input.

A monitor **747** or other type of display device is also connected to the system bus **723** via an interface, such as a video adapter **748.** In one embodiment of the claimed subject matter, the monitor comprises a Liquid Crystal Display (LCD). In addition to the monitor, computers typically include other peripheral output devices (not shown), such as speakers and printers. The monitor may include a touch sensitive surface which allows the user to interface with the computer by pressing on or touching the surface.

The computer **720** may operate in a networked environment using logical connections to one or more remote computers, such as a remote computer **749.** These logical connections are achieved by a communication device coupled to or a part of the computer **720;** the embodiment is not limited to a particular type of communications device. The remote computer **749** may be another computer, a server, a router, a network PC, a client, a peer device or other common network node, and typically includes many or all of the elements described above relative to the computer **720,** although only a memory storage device **750** has been illustrated in Figure 6. The logical connections depicted in Figure 6 include a local-area network (LAN) **751** and a wide-area network (WAN) **752.** Such networking environments are commonplace in offices, enterprise-wide computer networks, intranets and the Internet.

When used in a LAN-networking environment, the computer **720** is connected to the local network **751** through a network interface or adapter **753,** which is one type of communications device. When used in a WAN-networking environment, the computer **720** typically includes a modem **754,** a type of communications device, or any other type of communications device for establishing communications over the wide area network **752,** such as the Internet. The modem **754,** which may be internal or external, is connected to the system bus **723** via the serial port interface **746.** In a networked environment, program modules depicted relative to the personal computer **720,** or portions thereof, may be stored in the remote memory storage device. It is appreciated that the network connections shown are exemplary and other means of and communications devices for establishing a communications link between the computers may be used.

The hardware and operating environment in conjunction with which embodiments of the claimed subject matter may be practiced has been described. The computer in conjunction with which embodiments of the claimed subject matter may be practiced may be a conventional computer a hand-held or palm-size computer, a computer in an embedded system, a distributed computer, or any other type of computer; the claimed subject matter is not so limited. Such a computer typically includes one or more processing units as its processor, and a computer-readable medium such as a memory. The computer may also include a communications device such as a network adapter or a modem, so that it is able to communicatively couple other computers.

## Claims

1. A computer-implemented method, comprising:
identifying first weather information associated with a first time, and a first location, and a first weather event;
identifying second weather information associated with a second time;
identifying third weather information associated with a third time and the first weather event;
identifying observation data (136) received from a user (150) and related to the first weather information; and
generating, for display on a display device, a first timeline based on the observation data (136), the first weather information, the second weather information, and the third weather information.

2. The method of claim 1, wherein the first time is a past time, the second time is a current time, and the third time is a future time.

3. The method of claim 1 or 2, wherein at least one of the first weather information, the second weather information, and the third weather information comprises a forecasted weather value indicative of a probability of having a first type of precipitation in the first location with a first intensity.

4. The method of any of claims 1-3, wherein the second weather information is related to the first location.

5. The method of any of claims 1-4, wherein the second weather information is related to the first weather event.

6. The method of any of claims 1-5, wherein the first weather information, the second weather information, and the third weather information are related to the user.

7. The method of any of claims 1-6, wherein the observation data (136) corresponds to at least one of a picture, a video, a comment related to the first weather information.

8. The method of any of claims 1-7, further comprising generating a second timeline for display on the display device with the first timeline, the second timeline comprising information indicative of weather information associated with a fourth time and a fifth time.

9. The method of claim 1, wherein the first weather information, the second weather information, or the third weather information indicates a precipitation type, a temperature level or a wind intensity.

10. The method of claim 8, wherein the first timeline is associated with the first weather event and the second timeline is associated with a second weather event different from the first weather event.

11. The method of claim 8, wherein the first timeline is associated with a first user, the second timeline is associated with a second user different from the first user, and at least a portion of the observation data is received from the first and second users.

12. The method of any of claims 1-2, wherein the first weather event corresponds to at least one of a tornado, a hurricane, a hail cloud, a heavy rain, a heavy snow, a derecho, and a downburst.

13. A device (200) for generating a weather timeline, the device_comprising:
one or more processors (210);
a memory (220) that stores instructions for the one or more processors (210); and
a communication module to connect to a remote user device via a communication network, wherein when the one or more processors (210) execute the instructions stored in the memory (220), the device is caused to:
identify first weather information associated with a first time, a first location, and a first weather event;
identify second weather information associated with a second time;
identify third weather information associated with a third time and the first weather event;
identify observation data (136) received from a user (150) and related to the first weather information;
generate a first timeline based on the observation data (136), the first weather information, the second weather information, and the third weather information; and
transmit the first timeline to the remote user device for display on a display device.

14. The device of claim 13, wherein the observation data (136) comprises at least one of a picture, a video, or a comment related to the first weather information.

15. A non-transitory computer-readable medium storing instructions that, when executed by the processor (210) of the device of claim 13, cause the processor (210) to perform the method of any of claims 1-12.

## Patentansprüche

1. Computerimplementiertes Verfahren, umfassend:
Identifizieren von ersten Wetterinformationen, die einer ersten Zeit, einem ersten Standort und einem ersten Wetterereignis zugeordnet sind;
Identifizieren von zweiten Wetterinformationen, die einer zweiten Zeit zugeordnet sind;
Identifizieren von dritten Wetterinformationen, die einer dritten Zeit und dem ersten Wetterereignis zugeordnet sind;
Identifizieren von Beobachtungsdaten (136), die von einem Benutzer (150) empfangen und auf die ersten Wetterinformationen bezogen sind; und
Erzeugen einer ersten Zeitlinie basierend auf den Beobachtungsdaten (136), den ersten Wetterinformationen, den zweiten Wetterinformationen und den dritten Wetterinformationen zur Anzeige auf einer Anzeigevorrichtung.

2. Verfahren nach Anspruch 1, wobei die erste Zeit eine vergangene Zeit ist, die zweite Zeit eine gegenwärtige Zeit ist und die dritte Zeit eine zukünftige Zeit ist.

3. Verfahren nach Anspruch 1 oder 2, wobei mindestens eines von den ersten Wetterinformationen, den zweiten Wetterinformationen und den dritten Wetterinformationen einen prognostizierten Wetterwert umfasst, der auf die Möglichkeit hindeutet, eine erste Art von Niederschlag in dem ersten Standort mit einer ersten Intensität zu haben.

4. Verfahren nach einem der Ansprüche 1 bis 3, wobei die zweiten Wetterinformationen auf den ersten Standort bezogen sind.

5. Verfahren nach einem der Ansprüche 1 bis 4, wobei die zweiten Wetterinformationen auf das erste Wetterereignis bezogen sind.

6. Verfahren nach einem der Ansprüche 1 bis 5, wobei die ersten Wetterinformationen, die zweiten Wetterinformationen und die dritten Wetterinformationen auf den Benutzer bezogen sind.

7. Verfahren nach einem der Ansprüche 1 bis 6, wobei die Beobachtungsdaten (136) mindestens einem von einem Bild, einem Video, einer auf die ersten Wetterinformationen bezogenen Bemerkung entsprechen.

8. Verfahren nach einem der Ansprüche 1 bis 7, ferner umfassend das Erzeugen einer zweiten Zeitlinie zur Anzeige auf der Anzeigevorrichtung mit der ersten Zeitlinie, wobei die zweite Zeitlinie Informationen umfasst, die auf Wetterinformationen hindeuten, die einer vierten Zeit und einer fünften Zeit zugeordnet sind.

9. Verfahren nach Anspruch 1, wobei die ersten Wetterinformationen, die zweiten Wetterinformationen oder die dritten Wetterinformationen auf eine Niederschlagart, ein Temperaturniveau oder eine Windintensität hindeuten.

10. Verfahren nach Anspruch 8, wobei die erste Zeitlinie dem ersten Wetterereignis zugeordnet ist und die zweite Zeitlinie einem zweiten Wetterereignis zugeordnet ist, das anders als das erste Wetterereignis ist.

11. Verfahren nach Anspruch 8, wobei die erste Zeitlinie einem ersten Benutzer zugeordnet ist, die zweite Zeitlinie einem zweiten Benutzer zugeordnet ist, der anders als der erste Benutzer ist, und mindestens ein Teil der Beobachtungsdaten von dem ersten und dem zweiten Benutzer empfangen wird.

12. Verfahren nach einem der Ansprüche 1 bis 2, wobei das erste Wetterereignis mindestens einem von einem Tornado, einem Hurrikan, einer Hagelwolke, heftigem Regen, heftigem Schnee, einem Derecho und einer Fallbö entspricht.

13. Vorrichtung (200) zum Erzeugen einer Wetterzeitlinie, die Vorrichtung umfassend:
einen oder mehrere Prozessoren (210);
einen Speicher (220), der Anweisungen für den einen oder die mehreren Prozessoren (210) aufbewahrt; und
ein Kommunikationsmodul, um sich mit einer Remote-Benutzervorrichtung über ein Kommunikationsnetzwerk zu verbinden, wobei, wenn der eine oder die mehreren Prozessoren (210) die in dem Speicher (220) aufbewahrten Anweisungen ausführen, die Vorrichtung zu Folgendem veranlasst wird:
Identifizieren von ersten Wetterinformationen, die einer ersten Zeit, einem ersten Standort und einem ersten Wetterereignis zugeordnet sind;
Identifizieren von zweiten Wetterinformationen, die einer zweiten Zeit zugeordnet sind; Identifizieren von dritten Wetterinformationen, die einer dritten Zeit und dem ersten Wetterereignis zugeordnet sind;
Identifizieren von Beobachtungsdaten (136), die von einem Benutzer (150) empfangen und auf die ersten Wetterinformationen bezogen sind;
Erzeugen einer ersten Zeitlinie basierend auf den Beobachtungsdaten (136), den ersten Wetterinformationen, den zweiten Wetterinformationen und den dritten Wetterinformationen; und
Übertragen der ersten Zeitlinie an die Remote-Benutzervorrichtung zur Anzeige auf einer Anzeigevorrichtung.

14. Vorrichtung nach Anspruch 13, wobei die Beobachtungsdaten (136) mindestens eines von einem Bild, einem Video oder einer auf die ersten Wetterinformationen bezogenen Bemerkung umfassen.

15. Nicht vorübergehendes, computerlesbares Medium, das Anweisungen aufbewahrt, die, wenn sie von dem Prozessor (210) der Vorrichtung von Anspruch 13 ausgeführt sind, den Prozessor (210) dazu veranlassen, das Verfahren von einem der Ansprüche 1 bis 12 durchzuführen.

## Revendications

1. Procédé mis en œuvre par ordinateur, comprenant :
l'identification de premières informations météorologiques associées à une première heure, et à un premier lieu, et à un premier événement météorologique ;
l'identification de deuxièmes informations météorologiques associées à une deuxième heure ;
l'identification de troisièmes informations météorologiques associées à une troisième heure et au premier événement météorologique ;
l'identification de données d'observation (136) reçues d'un utilisateur (150) et liées aux premières informations météorologiques ; et
la génération, pour un affichage sur un dispositif d'affichage, d'un premier schéma chronologique sur la base des données d'observation (136), des premières informations météorologiques, des deuxièmes informations météorologiques et des troisièmes informations météorologiques.

2. Procédé selon la revendication 1, dans lequel la première heure est une heure passée, la deuxième heure est une heure actuelle et la troisième heure est une heure future.

3. Procédé selon la revendication 1 ou 2, dans lequel au moins les unes des premières informations météorologiques, des deuxièmes informations météorologiques et des troisièmes informations météorologiques comprennent une valeur météorologique prévue indiquant une probabilité d'avoir un premier type de précipitation dans le premier lieu avec une première intensité.

4. Procédé selon l'une quelconque des revendications 1 à 3, dans lequel les deuxièmes informations météorologiques sont liées au premier lieu.

5. Procédé selon l'une quelconque des revendications 1 à 4, dans lequel les deuxièmes informations météorologiques sont liées au premier événement météorologique.

6. Procédé selon l'une quelconque des revendications 1 à 5, dans lequel les premières informations météorologiques, les deuxièmes informations météorologiques et les troisièmes informations météorologiques sont liées à l'utilisateur.

7. Procédé selon l'une quelconque des revendications 1 à 6, dans lequel les données d'observation (136) correspondent à au moins l'un parmi une image, une vidéo, un commentaire lié aux premières informations météorologiques.

8. Procédé selon l'une quelconque des revendications 1 à 7, comprenant en outre la génération d'un second schéma chronologique pour un affichage sur le dispositif d'affichage avec le premier schéma chronologique, le second schéma chronologique comprenant des informations indiquant des informations météorologiques associées à une quatrième heure et à une cinquième heure.

9. Procédé selon la revendication 1, dans lequel les premières informations météorologiques, les deuxièmes informations météorologiques ou les troisièmes informations météorologiques indiquent un type de précipitation, un niveau de température ou une intensité de vent.

10. Procédé selon la revendication 8, dans lequel le premier schéma chronologique est associé au premier événement météorologique et le second schéma chronologique est associé à un second événement météorologique différent du premier événement météorologique.

11. Procédé selon la revendication 8, dans lequel le premier schéma chronologique est associé à un premier utilisateur, le second schéma chronologique est associé à un second utilisateur différent du premier utilisateur, et au moins une partie des données d'observation est reçue des premier et second utilisateurs.

12. Procédé selon l'une quelconque des revendications 1 et 2, dans lequel le premier événement météorologique correspond à au moins l'un parmi une tornade, un ouragan, un nuage de grêle, une forte pluie, une forte neige, un derecho et une rafale descendante.

13. Dispositif (200) permettant de générer un schéma chronologique météorologique, le dispositif comprenant :
un ou plusieurs processeurs (210) ;
une mémoire (220) qui stocke des instructions pour les un ou plusieurs processeurs (210) ; et
un module de communication pour se connecter à un dispositif utilisateur distant par l'intermédiaire d'un réseau de communication, dans lequel lorsque les un ou plusieurs processeurs (210) exécutent les instructions stockées dans la mémoire (220), le dispositif est amené à :
identifier les premières informations météorologiques associées à une première heure, à un premier lieu et à un premier événement météorologique ;
identifier les deuxièmes informations météorologiques associées à une deuxième heure ;
identifier les troisièmes informations météorologiques associées à une troisième heure et au premier événement météorologique ;
identifier les données d'observation (136) reçues d'un utilisateur (150) et liées aux premières informations météorologiques ;
générer un premier schéma chronologique sur la base des données d'observation (136), des premières informations météorologiques, des deuxièmes informations météorologiques et des troisièmes informations météorologiques ; et
transmettre le premier schéma chonologique au dispositif utilisateur distant pour un affichage sur un dispositif d'affichage.

14. Dispositif selon la revendication 13, dans lequel les données d'observation (136) comprennent au moins l'un parmi une image, une vidéo ou un commentaire lié aux premières informations météorologiques.

15. Support non transitoire lisible par ordinateur stockant des instructions qui, lorsqu'elles sont exécutées par le processeur (210) du dispositif selon la revendication 13, amènent le processeur (210) à exécuter le procédé selon l'une quelconque des revendications 1 à 12.
